# EUROPEAN PATENT APPLICATION

(11) **EP 4 664 216 A1**
(43) Date of publication of application: **17.12.2025**
(21) Application number: 25181109.7
(22) Date of filing: 05.06.2025
(51) Int. Cl.: G05B 19/401

(54) **SYSTEM AND METHOD TO DRESS A COATING USING LASER DOPPLER VIBROMETER**

(30) Priority: 10.06.2024 US 202418738228
(71) Applicant: RTX Corporation, Farmington, CT 06032 (US)
(72) Inventor: Kim, SeungBum, Glastonbury, 06033 (US); Kuczek, Andrzej E., Bristol, 06010 (US)
(74) Representative: Schmitt-Nilson Schraud Waibel Wohlfrom Patentanwälte Partnerschaft mbB

(57) **Abstract**

A coating dressing system including a laser Doppler vibrometer in operative communication with a controller; the laser Doppler vibrometer comprising a laser configured to emit a laser beam toward an object, the laser Doppler vibrometer comprising a sensor configured to sense a reflected laser pattern, wherein the reflected laser pattern comprises a reflection of the laser beam bouncing off the object; and a cutting tool in operative communication with the controller.

## Description

The present disclosure is directed to a coating dressing system and the process of employing a laser Doppler vibrometer to detect a location of a cutting tool during machining of a coating on a substrate.

Substrate materials can include a coating attached to the surface of the substrate material. After application of the coating on the substrate surface, the coating can require dressing operations to modify the coating dimensions. Cutting tools can be operated to remove excess portions of the coating. It is possible for the cutting tool to damage the surface of the substrate material when the cutting tool exceeds the coating material boundary. The dressing operation can include cutting tool operators manually performing the tasks in addition, there can be automatic cutting tool equipment that perform the dressing operations.

In accordance with the present disclosure, there is provided a coating dressing system comprising a laser Doppler vibrometer in operative communication with a controller; the laser Doppler vibrometer comprising a laser configured to emit a laser beam toward an object, the laser Doppler vibrometer comprising a sensor configured to sense a reflected laser pattern, wherein the reflected laser pattern comprises a reflection of the laser beam bouncing off the object; and a cutting tool in operative communication with the controller.

Particular embodiments further may include at least one, or a plurality of, the following optional features, alone or in combination with each other:

A further embodiment of any of the foregoing embodiments may additionally and/or alternatively include the object comprises a side surface of a substrate having a coating attached to a substrate upper surface, the substrate upper surface being adjacent to the side surface.

A further embodiment of any of the foregoing embodiments may additionally and/or alternatively include the reflected laser pattern indicates a level of vibration that the substrate is experiencing as a result of the cutting tool activity during dressing of the coating.

A further embodiment of any of the foregoing embodiments may additionally and/or alternatively include the laser Doppler vibrometer is configured to detect the acceleration of a vibration along the side surface at a variety of locations along the side surface.

A further embodiment of any of the foregoing embodiments may additionally and/or alternatively include the laser Doppler vibrometer is configured to detect and measure a vibration at a location A proximate to a cutting tool area of impact mapped along the side surface; the laser Doppler vibrometer is configured to detect another vibration at a location B along the side surface distal from the cutting tool area of impact.

A further embodiment of any of the foregoing embodiments may additionally and/or alternatively include acceleration of the vibration detected at each of the locations A and B is determined and compared with a database of vibration data, the database of vibration being in operative communication with the controller.

A further embodiment of any of the foregoing embodiments may additionally and/or alternatively include the database of vibration data is configured retrievable during a coating dressing operation and relied upon to a provide predetermined acceleration threshold for the substrate and coating; wherein the predetermined acceleration threshold is configured to actuate the controller to send a signal to cease movement of the cutting tool towards the substrate upper surface.

In accordance with the present disclosure, there is provided a coating dressing system comprising a laser Doppler vibrometer in operative communication with a controller; the laser Doppler vibrometer comprising a laser configured to emit a laser beam toward a side surface of a substrate having a coating attached to a substrate upper surface, the substrate upper surface being adjacent to the side surface, the laser Doppler vibrometer comprising a sensor configured to sense a reflected laser pattern, wherein the reflected laser pattern comprises a reflection of the laser beam bouncing off the side surface; and a cutting tool in operative communication with the controller, wherein the reflected laser pattern indicates a level of vibration that the substrate is experiencing as a result of the cutting tool activity during dressing of the coating.

Particular embodiments further may include at least one, or a plurality of, the following optional features, alone or in combination with each other:

A further embodiment of any of the foregoing embodiments may additionally and/or alternatively include the laser Doppler vibrometer is configured to detect the acceleration of a vibration along the side surface at a variety of locations along the side surface.

A further embodiment of any of the foregoing embodiments may additionally and/or alternatively include the laser Doppler vibrometer is configured to detect and measure a vibration at a location A proximate to a cutting tool area of impact mapped along the side surface; the laser Doppler vibrometer is configured to detect another vibration at a location B along the side surface distal from the cutting tool area of impact.

A further embodiment of any of the foregoing embodiments may additionally and/or alternatively include acceleration of the vibration detected at each of the locations A and B is determined and compared with a database of vibration data, the database of vibration data being in operative communication with the controller.

A further embodiment of any of the foregoing embodiments may additionally and/or alternatively include the database of vibration data is configured retrievable during a coating dressing operation and relied upon to a provide predetermined acceleration threshold for the substrate and coating; wherein the predetermined acceleration threshold is configured to actuate the controller to send a signal to cease movement of the cutting tool towards the substrate upper surface.

A further embodiment of any of the foregoing embodiments may additionally and/or alternatively include the coating dressing system further comprising a debris removal device in operative communication with the cutting tool area of impact, the debris removal device configured to remove airborne cuttings and dust produced from the coating materials removed by the cutting tool, wherein the debris removal device clears away the airborne materials enabling the laser Doppler vibrometer scanning of the substrate.

In accordance with the present disclosure, there is provided a process for dressing a coating on a substrate comprising measuring a response to a cutting tool induced vibration acceleration of various substrate materials and coatings along various points of interest on a substrate side surface; mapping the various substrate materials and coatings creating a predetermined acceleration threshold map, the predetermined acceleration threshold map indicates the location of a substrate upper surface; scanning a target substrate side surface of a target substrate and coating system involved with the coating dressing process; performing the coating dressing with the cutting tool; detecting the vibration acceleration with a laser Doppler vibrometer; detecting a predetermined acceleration threshold for the target substrate and coating system; sending a predetermined acceleration threshold indication signal via a controller; and altering the cutting direction of the cutting tool responsive to the predetermined acceleration threshold indication.

Particular embodiments further may include at least one, or a plurality of, the following optional features, alone or in combination with each other:

A further embodiment of any of the foregoing embodiments may additionally and/or alternatively include the process further comprising avoiding cutting tool contact with the substrate upper surface, responsive to the predetermined acceleration threshold indication signal.

A further embodiment of any of the foregoing embodiments may additionally and/or alternatively include the process further comprising coupling the laser Doppler vibrometer in operative communication with the controller; the laser Doppler vibrometer comprising a laser configured to emit a laser beam toward the target substrate side surface, the laser Doppler vibrometer comprising a sensor configured to sense a reflected laser pattern, wherein the reflected laser pattern comprises a reflection of the laser beam bouncing off the target substrate side surface; and the cutting tool in operative communication with the controller.

A further embodiment of any of the foregoing embodiments may additionally and/or alternatively include the process further comprising configuring the laser Doppler vibrometer to detect and measure a vibration at a location A proximate to a cutting tool area of impact mapped along the side surface; and configuring the laser Doppler vibrometer to detect another vibration at a location B along the side surface distal from the cutting tool area of impact.

A further embodiment of any of the foregoing embodiments may additionally and/or alternatively include the process further comprising detecting acceleration of the vibration detected at each of the locations A and B; determining and comparing the vibration detected at each of the locations A and B with a database of vibration data, the database of vibration data being in operative communication with the controller.

A further embodiment of any of the foregoing embodiments may additionally and/or alternatively include the process further comprising configuring the database of vibration data retrievable during a coating dressing operation; and configuring the database of vibration data to provide the predetermined acceleration threshold for the target substrate and coating system; and configuring the predetermined acceleration threshold to actuate the controller to send a signal to cease movement of the cutting tool towards the target substrate upper surface.

A further embodiment of any of the foregoing embodiments may additionally and/or alternatively include the process further comprising a debris removal device in operative communication with the cutting tool area of impact; configuring the debris removal device to remove airborne cuttings and dust produced from coating materials removed by the cutting tool; and clearing away the airborne cuttings and dust enabling scanning of the target substrate by the laser Doppler vibrometer.

Other details of the coating dressing system and process are set forth in the following detailed description and the accompanying drawings wherein like reference numerals depict like elements.
Fig. 1 is a schematic representation of an exemplary coating dressing system.
Fig. 2 is a graphical representation of acceleration values for an exemplary dressing operation utilizing the disclosed coating dressing system.
Fig. 3 is a process map of the exemplary coating dressing process.

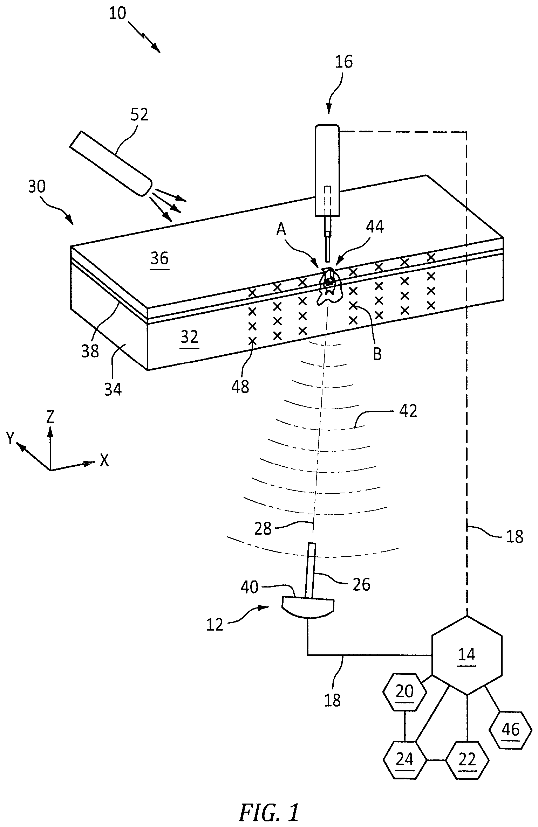

Referring now to Fig. 1, there is illustrated a coating dressing system 10. The coating dressing system 10 includes a laser Doppler vibrometer 12 in operative communication with a controller 14. The controller 14 is in operative communication with a cutting tool 16.

The controller 14 may include hardware, firmware, and/or software components that are configured to perform the functions disclosed herein, including the functions of the coating dressing system 10. While not specifically shown, the controller 14 may include other computing devices (e.g., servers, mobile computing devices, etc.) which may be in communication with each other and/or the controller 14 via a communication network 18 to perform one or more of the disclosed functions. The controller may include at least one processor 20 (e.g., a controller, microprocessor, microcontroller, digital signal processor, etc.), memory 22, and an input/output (I/O) subsystem 24. The controller 14 may be embodied as any type of computing device e.g., a server, an enterprise computer system, a network of computers, a combination of computers and other electronic devices, or other electronic devices. Although not specifically shown, the I/O subsystem 24 typically includes, for example, an I/O controller, a memory controller, and one or more I/O ports. The processor 20 and the I/O subsystem 24 are communicatively coupled to the memory 22. The memory 22 may be embodied as any type of computer memory device (e.g., volatile memory such as various forms of random access memory).

The laser Doppler vibrometer 12 includes a laser 26 that can emit a laser beam 28 toward an object 30, such as the side surface 32 of a substrate 34 having a coating 36 attached to a substrate upper surface 38. Laser doppler vibrometer 12 can also include a sensor 40 configured to sense a reflected laser pattern 42. The reflected laser pattern 42 can be a reflection of the laser beam 28 bouncing off the side surface 32 of the substrate 34. The reflected laser pattern 42 can indicate a level of vibration that the substrate 34 is experiencing as a result of the cutting tool 16 activity during dressing of the coating 36. The laser Doppler vibrometer 12 can be used to make non-contact vibration measurements of the side surface 32. The laser beam 28 can be directed at the side surface 32, and the vibration amplitude and frequency are extracted from the Doppler shift of the reflected laser beam pattern 42 frequency due to the motion of the side surface 32. The output of laser Doppler vibrometer 12 is generally a continuous analog voltage that is directly proportional to the target velocity component along the direction of the laser beam 28.

The laser Doppler vibrometer 12 can detect the relative vibration change, that is, the acceleration of the vibration along the side surface 32 at a variety of locations along the side surface 32. The laser Doppler vibrometer 12 can detect and measure the vibration at a particular location A proximate to the cutting tool 16 area of impact 44 mapped along the side surface 32. The laser Doppler vibrometer 12 can also detect a particular location B along the side surface 32 distal from the cutting tool 16 area of impact 44. It is possible to use measurement at location B as a reference value.

The acceleration of the vibration detected at each of the locations A and B can be determined and compared with a database of vibration data 46.

The database of vibration data 46 can be determined based on empirical data tests that measure the response to cutting tool 16 induced vibration acceleration of various substrate materials and coatings along various points of interest 48 that are mapped along the side surface 32. The points of interest 48 can be mapped for each style of substrate 34 and coating 36 combination. The points of interest 48 are shown as an X at Fig. 1, and spread across the side surface 32 to be targeted by the laser beam 28 from the laser 26 during operation of the laser Doppler vibrometer 12. The empirical data can produce data that can be used to prevent contact with the substrate upper surface 38.

The database of vibration data 46 can be retrieved during operation and relied upon to a provide predetermined acceleration threshold 50 for a particular substrate 34 and coating 36 combination. The predetermined acceleration threshold 50 provides an indication of when the cutting tool 16 has reached a location that is determined to be close to but not in contact with the substrate upper surface 38. The predetermined acceleration threshold 50 can be utilized to protect the substrate upper surface 38 from unwanted damage from the cutting tool 16.

For example, when the cutting tool 16 performs the coating 36 dressing process and advances through the coating 36 removing coating material. Vibration is induced into the substrate 34. The vibration is translated to the side surface 32. The acceleration of the vibration will have different values depending on the distance between the cutting tool 16 and the point of interest 48 on the side surface 32. The laser 26 directs the laser beam 28 at the various points of interest 48 and senses the reflected laser 26 signals with the sensor 40 and determines the acceleration values for each of the points of interest 48. As the cutting tool 16 approaches the substrate upper surface 38 the sensed values of acceleration approach the predetermined acceleration threshold 50. The controller 14 can then send a signal to the equipment operator (not shown) to cease with the movement of the cutting tool 16 towards the substrate upper surface 38. In the case of an automated cutting tool 16, the controller 14 can communicate to the machine to stop movement in the direction of the substrate upper surface 38 and proceed in another direction depending on the cutting path being employed during the dressing operation.

A debris removal device 52 can be employed to remove airborne cuttings and dust produced from the coating 36 materials being removed by the cutting tool 16. The debris removal device 52 can produce a jet of gas, such as air, to create a steady current flowing past the area of impact 44. The debris removal device 52 can keep the air clear of the airborne materials so that the laser Doppler vibrometer 12 can perform the scanning of the substrate 34.

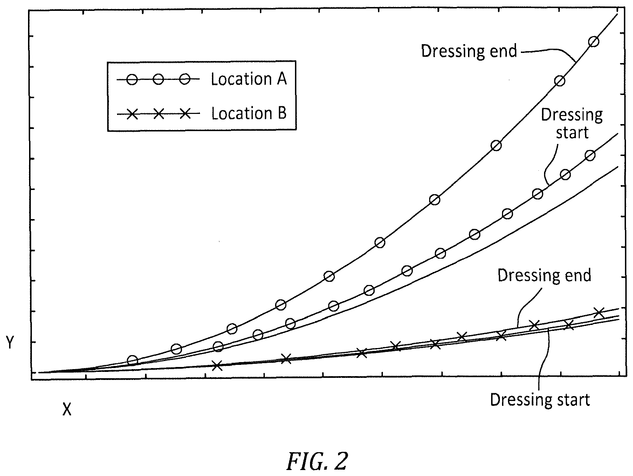

Also referring to Fig. 2, a graph of the relationship between the relative acceleration measured at two locations A, B can be seen. The laser vibrometer 12 reads vibration at multiple points in the metal substrate 34 simultaneously. The graph shows the frequency in Hz measured along the X axis and the magnitude of the acceleration along the Y axis. There is little detected vibration prior to beginning the coating dressing process. In the beginning of the cutting process, all points will produce low acceleration values. As the coating dressing process proceeds from Dressing start to Dressing end, the vibration at two different points A and B can be seen. As the cutting goes deeper into the coating 36 closer to the substrate upper surface 38, acceleration near the cutting tool 16 location goes higher compared to other readings. Location A is proximate the substrate upper surface 38 and location B is distal from the substrate upper surface 38. As the cutting tool 16 approaches the substrate upper surface 38 the acceleration at location A demonstrated in the curve trending upward in value until a maximum value is attained at the Dressing end. In contrast the curve for location B acceleration values are not increased in the same magnitude as seen for location A over the same duration. The information gathered from location B can serve as a reference value that can be compared with the information gathered from location A. The predetermined acceleration threshold 50 can be calculated by using the information from location A and location B through predictive modeling.

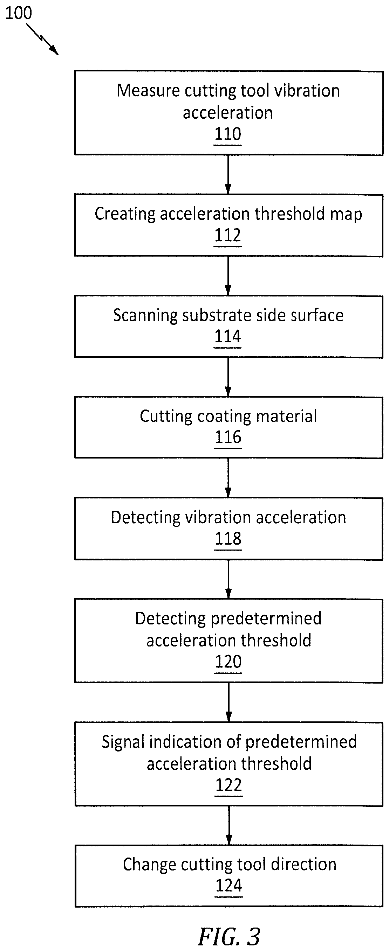

Also referring to Fig. 3, the exemplary process map is shown. In an exemplary coating dressing process 100, the first step 110 can include measuring the response to the cutting tool 16 induced vibration acceleration of various substrate materials and coatings along various points of interest 48. The next step 112 can include mapping the various substrate materials and coatings to create a predetermined acceleration threshold map that can indicate the location of the substrate upper surface 38. Acceleration values can differ by substrate material samples and cutting tools to be utilized. In-situ comparison of multiple sensor readings is preferrable. Multiple readings are needed to generate a useful sample. The next step 114 can include scanning a particular target substrate side surface 32 for a particular target substrate and coating system involved with the coating dressing process 100. Acceleration response adjacent to the cutting tool 16 is sensitive to coating 36 thickness.

The next step 116 can include performing the coating dressing with the cutting tool 16. At step 118 the laser Doppler vibrometer 12 can detect the vibration acceleration. The relative acceleration changes between locations A >> B is detected. At step 120 a predetermined acceleration threshold 50 can be detected. At step 122 the controller 14 can send a predetermined acceleration threshold 50 indication signal. At step 124 the cutting tool 16 can alter the cutting direction responsive to the predetermined acceleration threshold 50 indication. The cutting tool 16 will not contact the substrate upper surface 38. Further coating dressing can be continued.

A technical advantage of the disclosed coating dressing system and process can include a sensing system capable of providing a very clear indication to stop cutting the coating layer, which enables reduction in operation time and enhancement in part quality.

Another technical advantage of the disclosed coating dressing system and process can include the laser vibrometer reads vibration at multiple points in the metal substrate simultaneously.

Another technical advantage of the disclosed coating dressing system and process can include utilizing a point in the substrate distant from the coating as a reference sine that point is less affected by the cutting tool vibration than a point near the coating-substrate interface.

Another technical advantage of the disclosed coating dressing system and process can include remotely monitoring the changes in vibration measurements by use of a laser vibrometer to provide a warning signal to a machine operator to stop the cutting tool.

Another technical advantage of the disclosed coating dressing system and process can include application of the system for turning machines as well as milling machines.

There has been provided a coating dressing system and process. While the coating dressing system and process has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A coating dressing system comprising:
a laser Doppler vibrometer in operative communication with a controller; the laser Doppler vibrometer comprising a laser configured to emit a laser beam toward an object, the laser Doppler vibrometer comprising a sensor configured to sense a reflected laser pattern, wherein the reflected laser pattern comprises a reflection of the laser beam bouncing off the object; and
a cutting tool in operative communication with the controller.

2. The coating dressing system according to claim 1, wherein the object comprises a side surface of a substrate having a coating attached to a substrate upper surface, the substrate upper surface being adjacent to the side surface.

3. The coating dressing system according to claim 2, wherein the reflected laser pattern indicates a level of vibration that the substrate is experiencing as a result of the cutting tool activity during dressing of the coating.

4. The coating dressing system according to claim 2 or 3, wherein the laser Doppler vibrometer is configured to detect and the acceleration of a vibration along the side surface at a variety of locations along the side surface.

5. The coating dressing system according to any of claims 1 to 4, wherein the laser Doppler vibrometer is configured to detect and measure a vibration at a location A proximate to a cutting tool area of impact mapped along the side surface; the laser Doppler vibrometer is configured to detect another vibration at a location B along the side surface distal from the cutting tool area of impact.

6. The coating dressing system according to claim 5, wherein acceleration of the vibration detected at each of the locations A and B is determined and compared with a database of vibration data, the database of vibration being in operative communication with the controller.

7. The coating dressing system according to claim 6, wherein the database of vibration data is configured retrievable during a coating dressing operation and relied upon to a provide predetermined acceleration threshold for the substrate and coating; wherein the predetermined acceleration threshold is configured to actuate the controller to send a signal to cease movement of the cutting tool towards the substrate upper surface.

8. The coating dressing system according to any of claims 1 to 7, wherein:
the laser Doppler vibrometer comprises a laser configured to emit a laser beam toward a side surface of a substrate having a coating attached to a substrate upper surface, the substrate upper surface being adjacent to the side surface;
the reflected laser pattern comprises a reflection of the laser beam bouncing off the side surface; and
the cutting tool is in operative communication with the controller, wherein the reflected laser pattern indicates a level of vibration that the substrate is experiencing as a result of the cutting tool activity during dressing of the coating.

9. A process for dressing a coating on a substrate comprising:
measuring a response to a cutting tool induced vibration acceleration of various substrate materials and coatings along various points of interest on a substrate side surface;
mapping the various substrate materials and coatings creating a predetermined acceleration threshold map, the predetermined acceleration threshold map indicates the location of a substrate upper surface;
scanning a target substrate side surface of a target substrate and coating system involved with the coating dressing process;
performing the coating dressing with the cutting tool;
detecting the vibration acceleration with a laser Doppler vibrometer;
detecting a predetermined acceleration threshold for the target substrate and coating system;
sending a predetermined acceleration threshold indication signal via a controller; and
altering the cutting direction of the cutting tool responsive to the predetermined acceleration threshold indication.

10. The process of claim 9,
further comprising:
avoiding cutting tool contact with the substrate upper surface, responsive to the predetermined acceleration threshold indication signal.

11. The process of claim 9 or 10,
further comprising:
coupling the laser Doppler vibrometer in operative communication with the controller; the laser Doppler vibrometer comprising a laser configured to emit a laser beam toward the target substrate side surface, the laser Doppler vibrometer comprising a sensor configured to sense a reflected laser pattern, wherein the reflected laser pattern comprises a reflection of the laser beam bouncing off the target substrate side surface; and
the cutting tool in operative communication with the controller.

12. The process of any of claims 9 to 11,
further comprising:
configuring the laser Doppler vibrometer to detect and measure a vibration at a location A proximate to a cutting tool area of impact mapped along the side surface; and
configuring the laser Doppler vibrometer to detect another vibration at a location B along the side surface distal from the cutting tool area of impact.

13. The process of claim 17,
further comprising:
detecting acceleration of the vibration detected at each of the locations A and B;
determining and comparing the vibration detected at each of the locations A and B with a database of vibration data, the database of vibration data being in operative communication with the controller.

14. The process of claim 13,
further comprising:
configuring the database of vibration data retrievable during a coating dressing operation; and
configuring the database of vibration data to provide the predetermined acceleration threshold for the target substrate and coating system; and
configuring the predetermined acceleration threshold to actuate the controller to send a signal to cease movement of the cutting tool towards the target substrate upper surface.

15. The process of any of claims 9 to 14,
further comprising:
a debris removal device in operative communication with the cutting tool area of impact;
configuring the debris removal device to remove airborne cuttings and dust produced from coating materials removed by the cutting tool; and
clearing away the airborne cuttings and dust enabling scanning of the target substrate by the laser Doppler vibrometer.
